(19) Europäisches Patentamt
European Patent Office
Office européen des brevets

(11) **EP 3 171 505 B1**

(12) **FASCICULE DE BREVET EUROPEEN**

(45) Date de publication et mention de la délivrance du brevet:
**01.08.2018 Bulletin 2018/31**

(51) Int Cl.:
*H02M 7/797* *(2006.01)*       *B60L 11/18* *(2006.01)*
*H02J 7/02* *(2016.01)*          *H02M 1/42* *(2007.01)*

(21) Numéro de dépôt: **16198693.0**

(22) Date de dépôt: **14.11.2016**

(54) **DISPOSITIF DE CHARGE D'UNE BATTERIE DE TRACTION D'UN VEHICULE AUTOMOBILE A TRACTION AU MOINS PARTIELEMENT ELECTRIQUE**

**LADEVORRICHTUNG FÜR EINE ZUGBATTERIE EINES KRAFTFAHRZEUGS MIT EINEM ZUMINDEST TEILWEISE ELEKTRISCHEN ANTRIEB**

**DEVICE FOR CHARGING A TRACTION BATTERY OF A MOTOR VEHICLE WITH AT LEAST PARTIALLY ELECTRIC TRACTION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2015 FR 1561036**

(43) Date de publication de la demande:
**24.05.2017 Bulletin 2017/21**

(73) Titulaire: **Renault S.A.S.**
**92100 Boulogne-Billancourt (FR)**

(72) Inventeur: **SAKR, Nadim**
**75014 PARIS (FR)**

(56) Documents cités:
**WO-A1-2010/057893      DE-A1-102011 081 725**

- **GUI-JIA SU ET AL: "Current source inverter based traction drive for EV battery charging applications", 2011 IEEE VEHICLE POWER AND PROPULSION CONFERENCE (VPPC 2011) : CHICAGO, ILLINOIS, USA, 6 - 9 SEPTEMBER 2011, IEEE, PISCATAWAY, NJ, 6 septembre 2011 (2011-09-06), pages 1-6, XP031974933, DOI: 10.1109/VPPC.2011.6043143 ISBN: 978-1-61284-248-6**

- **MURAT YILMAZ ET AL: "Review of Battery Charger Topologies, Charging Power Levels, and Infrastructure for Plug-In Electric and Hybrid Vehicles", IEEE TRANSACTIONS ON POWER ELECTRONICS, vol. 28, no. 5, 1 mai 2013 (2013-05-01), pages 2151-2169, XP055096133, ISSN: 0885-8993, DOI: 10.1109/TPEL.2012.2212917**

- **RODRIGUES MARCIO C B P ET AL: "Simultaneous active power filter and G2V (or V2G) operation of EV on-board power electronics", IECON 2013 - 39TH ANNUAL CONFERENCE OF THE IEEE INDUSTRIAL ELECTRONICS SOCIETY, IEEE, 10 novembre 2013 (2013-11-10), pages 4684-4689, XP032538578, ISSN: 1553-572X, DOI: 10.1109/IECON.2013.6699891 [extrait le 2013-12-30]**

- **MANUELE BERTOLUZZO ET AL: "Overview on battery chargers for plug-in electric vehicles", POWER ELECTRONICS AND MOTION CONTROL CONFERENCE (EPE/PEMC), 2012 15TH INTERNATIONAL, IEEE, 4 septembre 2012 (2012-09-04), pages LS4d.1-1, XP032312063, DOI: 10.1109/EPEPEMC.2012.6397461 ISBN: 978-1-4673-1970-6**

**Description**

La présente invention se rapporte aux chaînes de traction de véhicules automobiles à traction au moins partiellement électrique, de type électrique ou hybride rechargeable, et se rapporte plus particulièrement à un dispositif de charge d'une batterie de traction d'un véhicule automobile à traction au moins partiellement électrique.

La chaîne de traction d'un véhicule automobile électrique ou hybride rechargeable comporte classiquement une batterie, un onduleur de tension, généralement désigné par le terme de VSI, pour « Voltage Source Inverter » en anglais, et une machine électrique constituée par le moteur électrique de traction du véhicule.

L'onduleur de tension nécessite l'emploi d'une capacité de taille non négligeable sur le bus d'alimentation en tension continu pour absorber les ondulations du courant engendrées par les commutations des interrupteurs de l'onduleur. En outre, l'onduleur de courant permet d'obtenir une tension plus élevée aux bornes de la machine électrique et donc une augmentation de sa plage de fonctionnement à couple maximal.

Ainsi, pour certaines applications, la tendance actuelle consiste à remplacer les onduleurs de tension par des onduleurs de courant.

On pourra à cet égard se référer au document « Current source inverter based traction drive for EV battery charging applications », IEEE Vehicle Power and Propulsion Conférence (VPPC), 2011, Gui-Jia SU and Lixin TANG.

Ce document concerne une chaîne de traction pour véhicule automobile électrique (EV) ou hybride basée sur l'utilisation d'un onduleur de courant (CSI pour « Current Source Inverter »), capable de fonctionner en mode de traction ou en mode de recharge de la batterie. Un commutateur est utilisé pour sélectionner le mode de fonctionnement de la chaîne de traction.

Lors de la charge, le contacteur est piloté pour déconnecter la machine électrique de l'onduleur de courant. L'onduleur assure la fonction de redresseur PFC (pour « Power Factor control », en anglais), permettant la recharge de la batterie lorsque le véhicule est à l'arrêt.

L'ajout du contacteur pose toutefois un problème de sécurité, des pertes supplémentaires en mode de traction et présente un surcoût pour le système de traction globale.

Le but de l'invention est donc de pallier ces inconvénients et de proposer une chaîne de traction capable d'assurer la charge d'une batterie de traction d'un véhicule automobile électrique ou hybride et ce, à faible coût.

L'invention a donc pour objet un dispositif de charge d'une batterie de traction d'un véhicule automobile à traction au moins partiellement électrique, ledit véhicule automobile comprenant une chaîne de traction comprenant un onduleur de courant assurant l'alimentation en puissance d'une machine électrique et un convertisseur de puissance assurant un transfert bidirectionnel de la puissance électrique entre l'onduleur et la batterie.

Ce dispositif de charge comporte un circuit comprenant au moins une branche formée de deux éléments capacitifs ou redresseurs en parallèle sur le convertisseur de puissance et dont le point milieu situé entre lesdits éléments capacitifs ou redresseurs est apte à être raccordé à une première phase d'un réseau d'alimentation électrique, un point milieu d'un bras de l'onduleur étant apte à être raccordé à une deuxième phase du réseau d'alimentation. Plus précisément quand la branche comporte deux éléments redresseurs, celle-ci est raccordée en parallèle sur le convertisseur de puissance par l'intermédiaire d'inductances raccordées aux points milieux de chaque bras du convertisseur de puissance.

L'utilisation d'éléments capacitifs ou redresseurs en parallèle du commutateur de puissance et le raccordement des phases du réseau d'alimentation au point milieu entre ces éléments capacitifs ou redresseurs, d'une part, et au point milieu d'un des bras de l'onduleur, d'autre part, permet de charger la batterie tout en assurant la fonction de redresseur PFC.

Dans un mode de réalisation, la branche de circuit comprend deux éléments capacitifs en série et est raccordée en parallèle entre la batterie et le convertisseur de tension.

Dans un autre mode de réalisation, la branche de circuit comprend deux éléments redresseurs en série et est raccordée en parallèle entre le convertisseur de puissance et l'onduleur de courant.

On peut prévoir que le circuit comprenne une première branche comprenant deux éléments capacitifs en parallèle sur le convertisseur et une deuxième branche comprenant deux éléments redresseurs en parallèle sur l'onduleur, le point milieu de chacune des première et deuxième branches étant apte à être raccordé à la deuxième phase.

Dans un autre mode de réalisation, au moins deux transistors formant interrupteurs sont respectivement raccordés en série sur chaque élément redresseur, une phase du réseau étant raccordée au point milieu situé entre les transistors.

Selon encore un autre mode de réalisation, le réseau est un réseau d'alimentation triphasé, le circuit comprenant deux branches comportant chacune deux transistors formant interrupteurs raccordés chacun en série sur un élément redresseur, deux phases du réseau étant respectivement raccordées au point milieu situé entre les transistors.

D'autres buts, caractéristiques et avantages de l'invention apparaîtront à la lecture de la description suivante, donnée uniquement à titre d'exemple non limitatif, et faite en référence aux dessins annexés sur lesquels :

- La figure 1 illustre l'architecture d'une chaîne de traction à onduleur de courant ;
- La figure 2 illustre une chaîne de traction à onduleur de courant selon un premier mode de réalisation de l'invention ;

- La figure 3 montre le circuit équivalent de la chaîne de traction de la figure 2 ;
- Les figures 4a et 4b sont des courbes montrant l'évolution du courant et de signaux de commande d'interrupteurs du convertisseur de puissance en fonction du temps ;
- Les figures 5 et 6 illustrent respectivement un deuxième mode de réalisation d'une chaîne de traction conforme à l'invention et le circuit équivalent correspondant ;
- La figure 7 illustre un deuxième mode de réalisation d'une chaîne de traction conforme à l'invention ;
- La figure 8 illustre le schéma équivalent de la chaîne de traction de la figure 7 ;
- Les figures 9a à 9e sont des courbes illustrant le fonctionnement de la chaîne de traction de la figure 8 ;
- La figure 10 illustre un quatrième mode de réalisation d'une chaîne de traction selon l'invention ;
- Les figures 11a à 11d sont des courbes illustrant le fonctionnement de la chaîne de traction de la figure 10 ; et
- La figure 12 illustre un cinquième mode de réalisation d'une chaîne de traction conforme à l'invention.

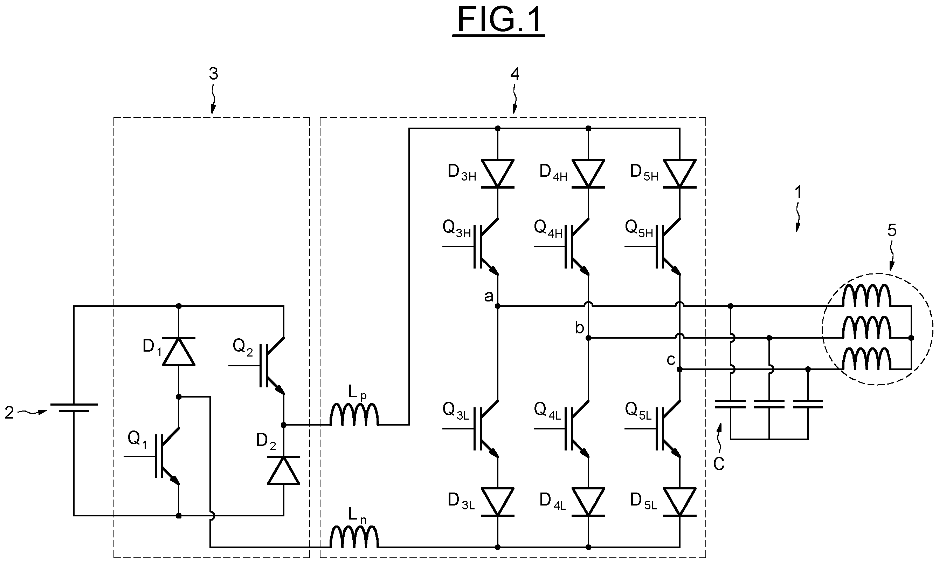

On se référera tout d'abord à la figure 1 qui illustre l'architecture générale d'une chaîne de traction d'un véhicule automobile à traction au moins partiellement électrique, désignée par la référence numérique générale 1.

Comme on le voit, la chaîne de traction 1 comporte une batterie 2, constituée par la batterie de traction du véhicule, un convertisseur de puissance 3 constitué par un pont asymétrique, un onduleur de courant 4 et une machine électrique 5 constituée par le moteur électrique de traction du véhicule.

Comme on le voit, le convertisseur de puissance 3 comporte deux branches formées chacune par un transistor fonctionnant en interrupteur, respectivement Q1 et Q2, et par une diode D1 et D2, l'anode de la diode D1 étant raccordée au collecteur du transistor Q1 et la cathode de la diode D2 étant raccordée à l'émetteur du transistor Q2. La cathode de la diode D1 de l'une des branches et l'émetteur du transistor Q1 de cette branche sont respectivement raccordés aux deux bornes de la batterie 2. De même, le collecteur du transistor Q2 de l'autre branche et l'anode de la diode D2 de cette branche sont respectivement raccordés aux bornes de la batterie.

Les points milieux entre chacune des diodes D1 et D2 et respectivement chacun des transistors Q1 et Q2 sont raccordés par l'intermédiaire d'inductances Ln et Lp à l'onduleur de courant.

Celui-ci comporte trois branches identiques formées chacune par l'association en série de deux transistors Q3H et Q3L, Q4H et Q4L et Q5H et Q5L tels que l'émetteur de l'un des transistors soit raccordé au collecteur de l'autre transistor et de deux diodes D3H et D3L, D4H et D4L et D5H et D5L raccordées de sorte que la cathode de l'une des diodes soit raccordée au collecteur du premier transistor Q3H, Q4H et Q5H et l'émetteur de l'autre transistor Q3L, Q4L et Q5L soit raccordé à l'anode de l'autre diode D3L, D4L et D5L.

Les points milieux a, b et c entre les transistors de chaque branche sont raccordés aux phases du moteur électrique 5, par l'intermédiaire de condensateurs C raccordés entre chacune des phases.

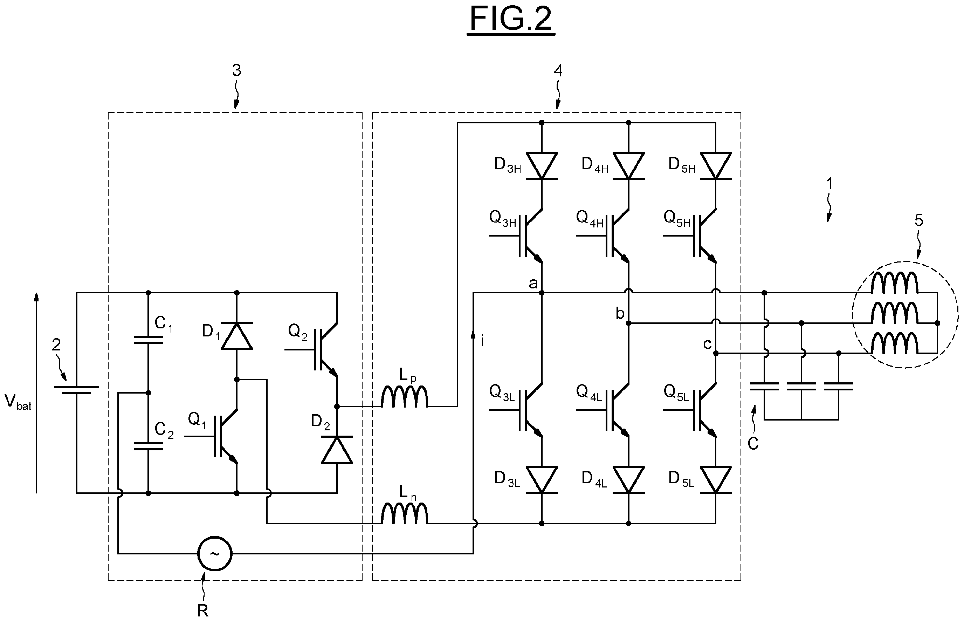

En référence à la figure 2, selon un premier mode de réalisation, pour assurer un fonctionnement en redresseur PFC, on raccorde un circuit en parallèle sur le convertisseur de puissance 3.

En référence à la figure 2, selon un premier mode de réalisation, qui convient pour des tensions de batterie Vbat supérieures à deux fois la valeur crête de la tension du réseau monophasé le circuit comporte une branche comprenant deux capacités C1 et C2 connectées en parallèle entre la batterie 2 et le convertisseur de puissance 3. Ce mode de réalisation est adapté pour le raccordement de la chaîne de traction à un réseau électrique monophasé.

Le réseau électrique est raccordé entre le circuit connecté en parallèle sur le convertisseur de puissance et l'onduleur de courant 4.

Comme on le voit, une première phase du réseau R est raccordée au point milieu entre les capacités C1 et C2 tandis que l'autre phase du réseau est raccordée au point milieu entre les transistors de l'une des branches de l'onduleur de courant 4.

Dans l'exemple de réalisation représenté, la deuxième phase du réseau R est raccordée au point milieu a situé entre les transistors Q3H et Q3L. On pourrait bien entendu, en variante, raccorder la phase du réseau d'alimentation au point milieu b ou c.

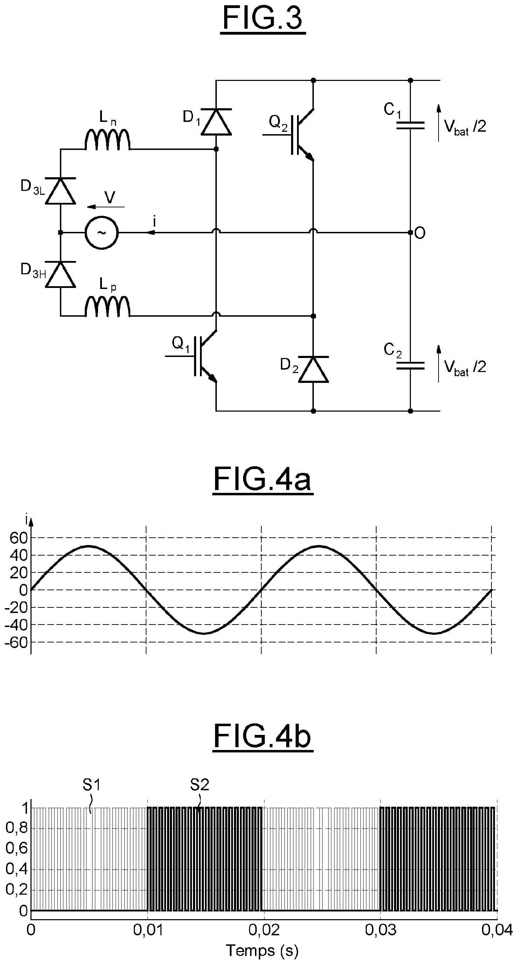

Le circuit équivalent est visible sur la figure 3.

Les transistors fonctionnant en interrupteurs du convertisseur de puissance 3 et de l'onduleur de courant 4 sont raccordés à une unité centrale de commande (non représentée).

Pendant la charge, les transistors Q3H et Q3L et, de manière générale, les transistors de la branche de l'onduleur de courant entre lesquels est raccordée l'une des phases du réseau d'alimentation sont passants. Le convertisseur devient alors équivalent à un redresseur élévateur de tension permettant de charger la batterie tout en assurant un facteur de puissance unitaire.

Lors de l'alternance positive, c'est-à-dire lorsque la tension délivrée par le réseau est positive, le premier bras du convertisseur de puissance formé par l'association du transistor Q1 et de la diode D1 est commandé par l'unité centrale de commande en modulation par largeur d'impulsions MLI alors que l'autre bras du convertisseur de puissance formé par le transistor Q2 et la diode D2 est non commandé.

Lors du pilotage du premier bras du convertisseur de puissance 3, lorsque le transistor Q1 est passant et la diode D1 est non passante, le courant de charge i délivré par le réseau R passe à travers le transistor Q3L et la diode D3L de la branche de l'onduleur de courant, à travers l'inductance Ln, à travers le transistor Q1 de la branche du convertisseur de puissance et par la capacité C2.

On a alors :

$$L_n \frac{di}{dt} = v + V_{bat}/2 \qquad (1)$$

dans laquelle v désigne la tension délivrée par le réseau. di/dt>0, donc le courant augmente.

Lorsque le transistor Q1 n'est pas passant et la diode D1 est passante, le courant i passe dès lors à travers le transistor Q3L passant, la diode D3L de la branche de l'onduleur de courant, l'inductance Ln, la diode D1 de la branche du convertisseur de puissance et la capacité C1.

On a alors :

$$L_n \frac{di}{dt} = v - V_{bat}/2 \qquad (2)$$

Pour que le courant puisse décroître, il faut que di/dt<0. Il faut dès lors que la tension de la batterie Vbat satisfasse à la relation :

$$V_{bat} > 2V_m = 620V \qquad (3)$$

dans laquelle Vm désigne la tension de crête de V.

Lors de l'alternance négative, c'est-à-dire lorsque v<0, le second bras du pont asymétrique 3, formé par le transistor Q2 et la diode D2 est commandé en modulation par largeur d'impulsions MLI alors que le premier bras formé par le transistor Q1 et la diode D1 est non commandé.

Lorsque le transistor Q2 est passant et la diode D2 est non passante, le courant i passe dans la capacité C1, le transistor Q2, l'inductance Lp, la diode D3H et le transistor Q3H.

On a alors :

$$L_p \frac{di}{dt} = v - V_{bat}/2 \qquad (4)$$

di/dt<0, donc le courant diminue.

Lorsque le transistor Q2 est non passant et la diode D2 est passante, le courant i passe à travers la capacité C2, la diode D2, l'inductance Lp, le transistor passant Q3H et la diode D3H. On a alors :

$$L_p \frac{di}{dt} = v + V_{bat}/2 \qquad (5)$$

Pour que le courant puisse croître, il faut que di/dt>0 c'est-à-dire que $V_{bat}$>2Vm=620 volts.

Ainsi, le mode de réalisation visible sur les figures 2 et 3 convient pour une tension minimale de batterie supérieure à deux fois la valeur crête de la tension phase-neutre du réseau, soit 620 volts pour une tension maximale de 310 volts.

On a représenté sur les figures 4a et 4b l'évolution du courant i délivré à la machine électrique 5 (figure 4a) et les signaux de commande S1 et S2 fournis aux transistors Q1 et Q2, respectivement.

Comme on le voit, ce mode de réalisation permet d'obtenir un courant de charge parfaitement sinusoïdal.

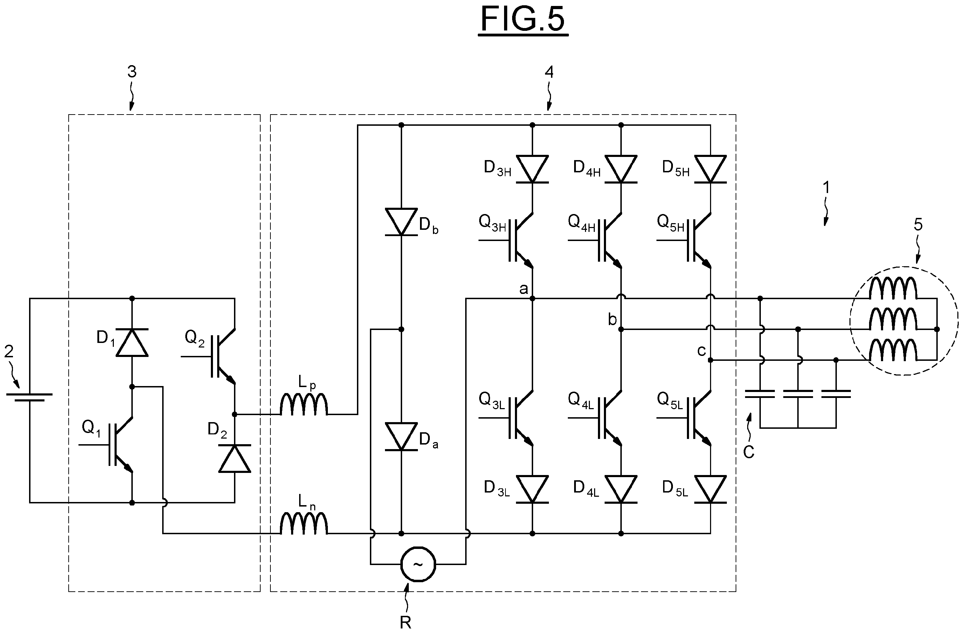

On a représenté sur la figure 5 un autre mode de réalisation d'une chaîne de traction conforme à l'invention utilisable dans le cas où la batterie a une tension inférieure à 620 volts.

Dans ce cas, deux diodes Db et Da sont connectées en parallèle sur le convertisseur de puissance, et notamment entre le convertisseur de puissance 3 et l'onduleur de courant 4.

La cathode de la première diode Da est raccordée au premier bras du convertisseur de puissance par l'intermédiaire de l'inductance Ln. L'anode de cette diode Da est raccordée à la cathode de l'autre diode Db dont l'anode est raccordée au deuxième bras du convertisseur de puissance par l'intermédiaire de l'inductance Lp.

Dans ce cas, le réseau R qui est raccordé aux points milieux a, b ou c de l'un des bras de l'onduleur de courant est ici raccordé au point milieu entre les deux diodes Da et Db.

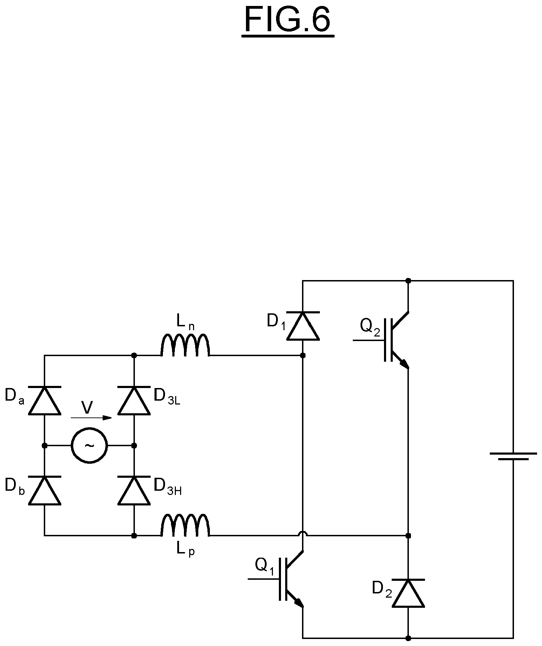

Le schéma équivalent est visible sur la figure 6.

Les transistors Q3H et Q3L, et de manière générale les transistors de la branche à laquelle est raccordé le réseau électrique R, sont toujours passants et le convertisseur de puissance devient équivalent à un redresseur à diodes suivi d'un étage élévateur de tension permettant de charger la batterie tout en assurant un facteur de puissance unitaire.

Lors de l'alternance positive (v>0), le transistor Q2 n'est pas commandé.

Lorsque le transistor Q1 est passant et la diode D1 est non passante, le courant i passe à travers le transistor Q3L passant et la diode D3L de la première branche de l'onduleur de courant, l'inductance Ln, le transistor Q1, la diode D2, l'inductance Lp et la deuxième diode Db du circuit raccordé en parallèle entre le convertisseur et l'onduleur de courant.

On peut alors écrire :

$$(Lp + Ln)\frac{di}{dt} = v \qquad (6)$$

di/dt>0 donc le courant augmente.

Lorsque le transistor Q1 est non passant et la diode D1 est passante, le courant i passe alors à travers le transistor Q3L passant et la diode D3L de la branche de l'onduleur de courant à laquelle est raccordée la deuxième phase du réseau d'alimentation, l'inductance Ln, la diode D1 du premier bras du convertisseur de puissance, la batterie, la diode D2 de l'autre bras du convertisseur de puissance, l'inductance Lp et la deuxième diode Db du circuit branché entre le convertisseur de puissance et l'onduleur de courant.

Pour que le courant puisse décroître, il faut que di/dt<0, c'est-à-dire que Vbat>Vm=310 volts.

Le fonctionnement est similaire pour l'alternance négative pendant laquelle le transistor Q2 est commandé en MLI et le transistor Q1 est non commandé.

Ainsi, selon ce mode de réalisation, le bon fonctionnement de la chaîne de traction nécessite une tension minimale de la batterie supérieure à la tension de crête phase-neutre du réseau, soit 310 volts pour une tension efficace de 220 volts.

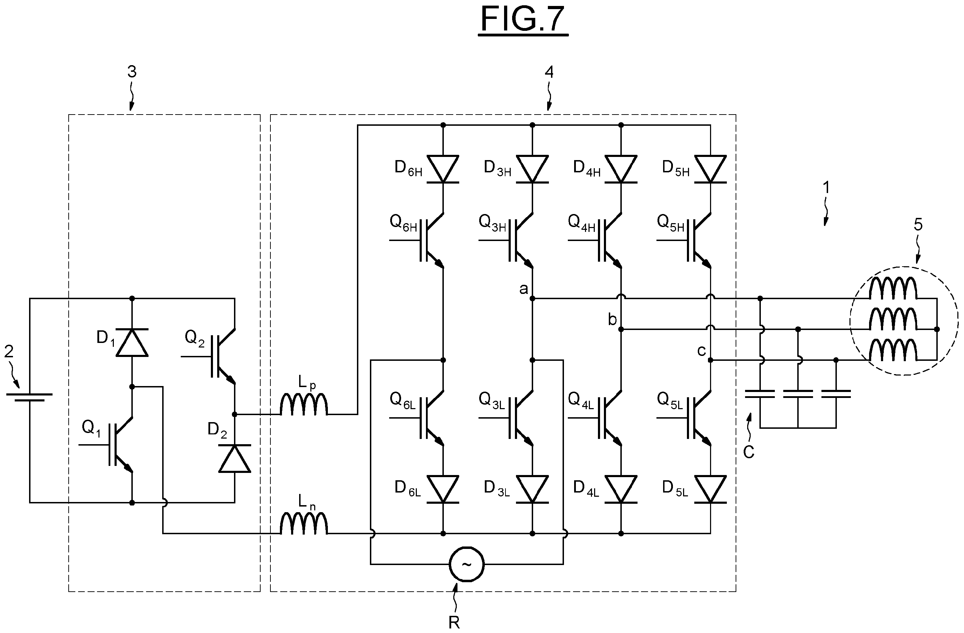

Selon un troisième mode de réalisation, visible sur la figure 7, le circuit branché entre l'onduleur de courant et le convertisseur de puissance comprend une branche comprenant deux transistors Q6H et Q6L et deux diodes D6H et D6L branchées en série. L'anode de la diode D6H est raccordée à l'inductance Lp et sa cathode est raccordée au collecteur du transistor Q6H dont l'émetteur est raccordé au collecteur du deuxième transistor Q6L. L'émetteur de ce deuxième transistor Q6L est raccordé à l'anode de la deuxième diode D6L dont la cathode est raccordée à l'inductance Ln.

Le réseau électrique et raccordé au point milieu entre les transistors Q6H et Q6L, c'est-à-dire entre l'émetteur et le collecteur de ces transistors. L'autre phase du réseau d'alimentation R est raccordée au point milieu a, b, c de l'une des branches de l'onduleur de courant, ici le point milieu a.

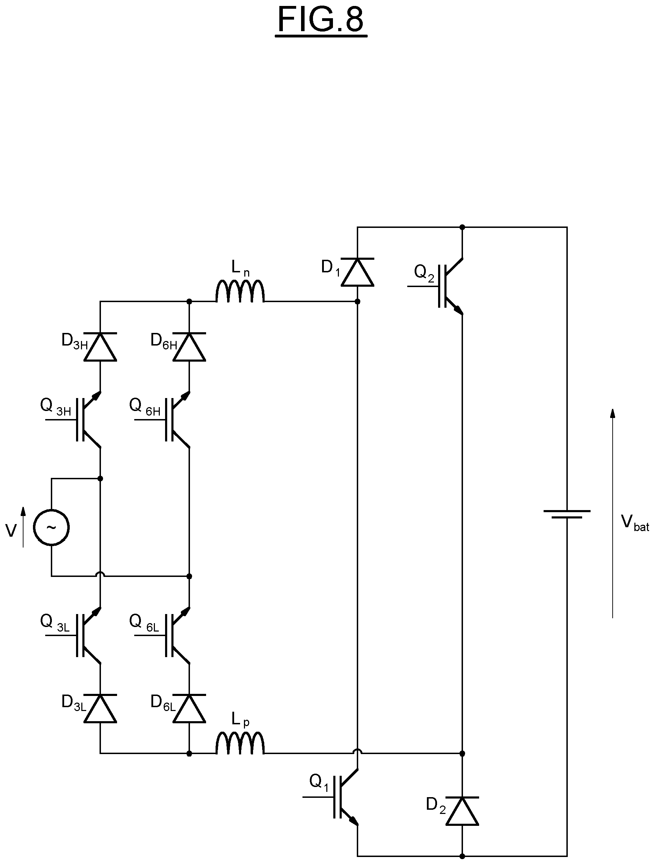

Le schéma équivalent de ces circuits est visible sur la figure 8.

On peut distinguer deux modes de fonctionnement.

Selon un premier mode de fonctionnement, la chaîne de traction fonctionne en chargeur PFC abaisseur de tension (« buck »). Lorsque la tension de la batterie est inférieure à la tension du réseau (Vbat<v), les transistors Q3H, Q3L, Q6H et Q6L des branches auxquelles sont raccordées les deux phases du réseau sont commandés en modulation par largeur d'impulsions et les transistors Q1 et Q2 des bras du convertisseur de puissance sont bloqués.

En mode chargeur PFC élévateur de tension (« boost »), lorsque la tension de la batterie est supérieure à la tension du réseau (Vbat>v), les transistors Q3H, Q3L, Q6H et Q6L sont passants et les transistors Q1 et Q2 sont commandés en modulation par largeur d'impulsions. On obtient dans ce cas un fonctionnement similaire au deuxième mode de réalisation.

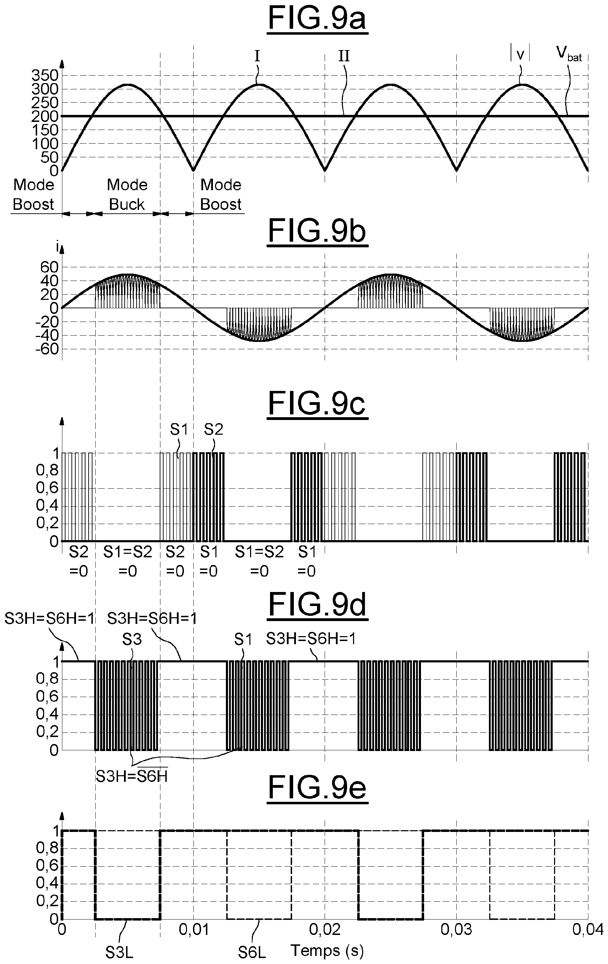

On a représenté sur les figures 9a à 9e des courbes illustrant le fonctionnement de ce mode de réalisation, pendant les phases de fonctionnement en mode « boost » élévateur de tension et en mode « buck » abaisseur de tension. Sur la figure 9a, la courbe I représente la valeur absolue de la tension délivrée par le réseau |v| et la courbe II représente la tension Vbat aux bornes de la batterie.

Les signaux S1, S2, S3H, S3L, S6H et S6L représentent respectivement les signaux de commande des transistors Q1, Q2, Q3H, Q3L, Q6H et Q6L.

Comme on le voit, on obtient également, en sortie, un courant de charge i sinusoïdal.

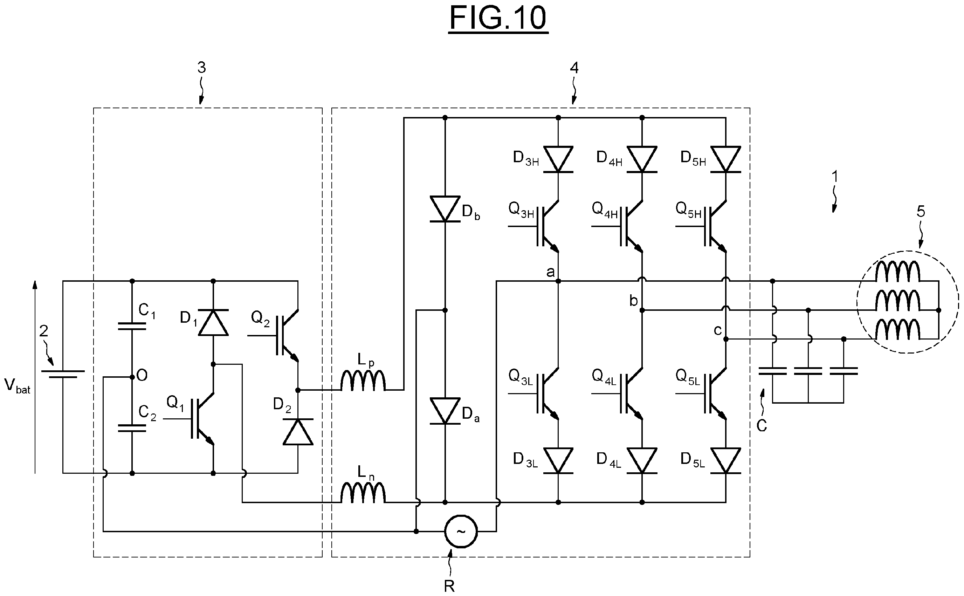

Selon un quatrième mode de réalisation visible sur la figure 10, qui correspond à la combinaison du premier et du deuxième mode de réalisation, et qui correspond à une absence de contrainte sur la tension de la batterie, on branche deux diodes Da et Db en parallèle sur l'onduleur de courant et deux condensateurs C1 et C2 en parallèle entre la batterie et le convertisseur de puissance.

En d'autres termes, par rapport au mode de réalisation de la figure 6, on économise deux transistors. Les capacités C1 et C2 sont maintenues pour des raisons de filtrage.

On distingue deux modes de fonctionnement.

En mode chargeur de type PFC abaisseur de tension (« buck ») lorsque la tension du réseau est supérieure à la moitié de la tension de la batterie (v>Vbat/2), les transistors Q3H et Q3L sont commandés en modulation par largeur d'impulsions et les transistors Q1 et Q2 du convertisseur de puissance sont bloqués.

En mode chargeur PFC de type élévateur de tension, lorsque la tension du réseau est supérieure à la moitié de la tension de la batterie (v>Vbat/2), les transistors Q3H et Q3L de l'onduleur de courant sont commandés en modulation par largeur d'impulsions et les transistors Q1 et Q2 du convertisseur de puissance sont bloqués.

En mode chargeur PFC de type élévateur de tension (« boost »), lorsque la tension du réseau est inférieure à la moitié de la tension de la batterie (v<Vbat/2), les transistors Q3H et Q3L sont passants, les diodes Da et Db sont bloquées et les transistors Q1 et Q2 du convertisseur de puissance sont commandés en modulation par largeur d'impulsions. On obtient dès lors un fonctionnement similaire au premier mode de réalisation décrit en référence à la figure 1.

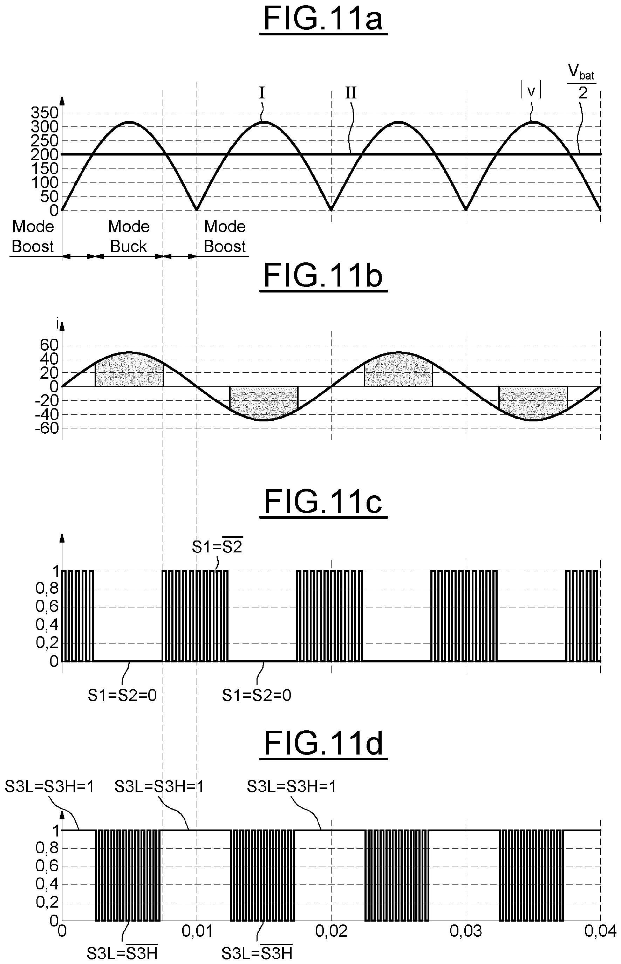

On a représenté sur les figures 11a à 11d l'évolution des principaux signaux dans le chargeur de la figure 10.

Sur ces figures, |v| désigne la valeur absolue de la tension d'entrée, Vbat/2 désigne la tension aux bornes de la batterie divisée par deux, les signaux S3L, S3H, S1 et S2 désignent respectivement les signaux de commande des transistors Q3L, Q3H, Q1 et Q2. Comme on le voit, on obtient également, en sortie, un courant de charge sinusoïdal (figure 11b).

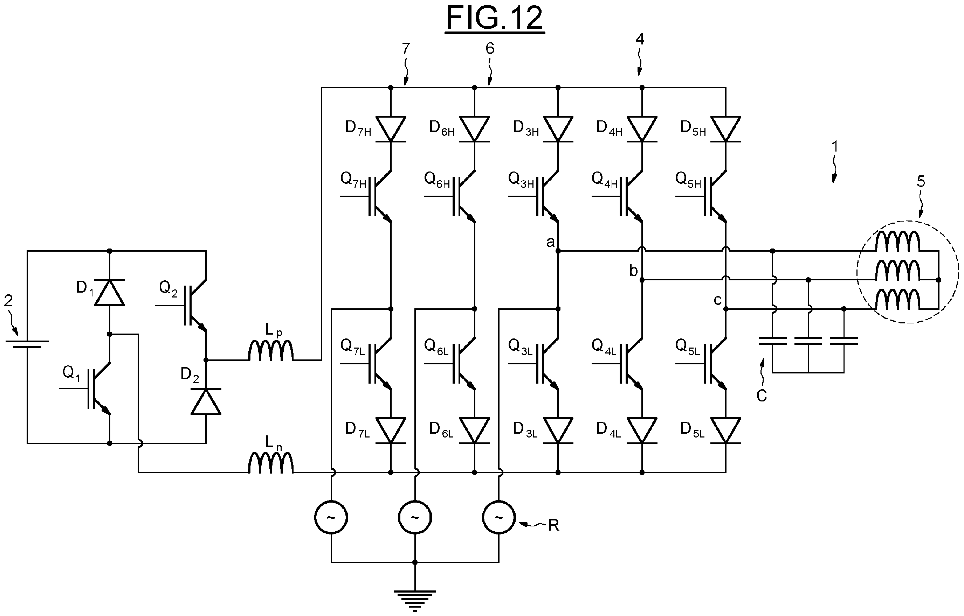

Selon encore un autre mode de réalisation visible sur la figure 12, qui correspond à un mode de charge à partir d'un réseau R triphasé, par rapport au mode de réalisation de la figure 7, on rajoute une branche au circuit raccordé en parallèle entre le convertisseur de puissance 3 et l'onduleur de courant.

En d'autres termes, le circuit comporte deux branches 6 et 7 comprenant chacune deux transistors Q6H et Q6L, d'une part et Q7H et Q7L, d'autre part et deux diodes, D6H et D6L, d'une part et D7H et D7L, d'autre part.

Dans chaque branche, la cathode de l'une des diodes D6H ou D7H est raccordée au collecteur d'un premier transistor Q6H ou Q7H dont l'émetteur est raccordé au collecteur de l'autre transistor D6L ou D7L dont l'émetteur est raccordé à l'anode de la deuxième diode D6L ou D7L.

Le convertisseur devient équivalent à un chargeur PFC de type « buck » suivi d'un étage « boost ».


## Revendications

1. Véhicule automobile à traction au moins partiellement électrique, ledit véhicule automobile comprenant une batterie de traction et une chaîne de traction (1) comprenant un onduleur de courant (4) assurant l'alimentation en puissance d'une machine électrique (5) et un convertisseur de puissance (3) comportant deux branches formées chacune par un transistor fonctionnant en interrupteur (Q1, Q2) et par une diode (D1, D2), les points milieux entre chacune des diodes (D1, D2) et respectivement chacun des transistors (Q1, Q2) étant raccordés par l'intermédiaire d'inductances (Ln, Lp) à l'onduleur du courant, assurant un transfert bidirectionnel de la puissance électrique entre l'onduleur et la batterie, **caractérisé en ce qu'**il comporte un circuit comprenant au moins une branche formée de deux éléments capacitifs (C1, C2) et raccordée en parallèle entre la batterie et le convertisseur de puissance, ou bien au moins une branche formée de deux éléments redresseurs (Da, Db) raccordée en parallèle sur l'onduleur de courant un point milieu de ladite au moins une branche étant situé entre lesdits éléments capacitifs ou redresseurs et étant apte à être raccordé à une première phase d'un réseau (R) d'alimentation électrique, un point milieu d'un bras de l'onduleur (4) étant apte à être raccordé à une deuxième phase du réseau d'alimentation.

2. Véhicule selon la revendication 1, dans lequel la branche du circuit comprend deux éléments capacitifs (C1, C2) en série et est raccordée en parallèle entre la batterie et le convertisseur de tension.

3. Véhicule selon la revendication 1, dans lequel la branche de circuit comprend deux éléments redresseurs (Da, Db) en série et est raccordée en parallèle entre le convertisseur de puissance et l'onduleur de courant.

4. Véhicule selon la revendication 3, dans lequel le circuit comprend une première branche comprenant deux éléments capacitifs (C1, C2) en parallèle sur le convertisseur et une deuxième branche comprenant deux éléments redresseurs (Da, Db) en parallèle sur l'onduleur, le point milieu de chacune des première et deuxième branches étant apte à être raccordé à la première phase.

5. Véhicule selon la revendication 3, dans lequel au moins deux transistors formant interrupteurs sont respectivement raccordés en série sur chaque élément redresseur, une phase du réseau étant raccordée au point milieu situé entre les transistors.

6. Véhicule selon la revendication 5, dans lequel le réseau est un réseau d'alimentation triphasée, le circuit comprenant deux branches (6, 7) comprenant chacune deux transistors formant interrupteurs raccordés chacun en série sur un élément redresseur, deux phases du réseau étant respectivement raccordées au point milieu situé entre les transistors.


## Patentansprüche

1. Kraftfahrzeug mit wenigstens teilweise elektrischem Antrieb, wobei das Kraftfahrzeug eine Antriebsbatterie und einen Antriebsstrang (1) umfasst, welcher einen Stromwechselrichter (4), der die Stromversorgung einer elektrischen Maschine (5) sicherstellt, und einen Leistungswandler (3), der zwei Zweige aufweist, die jeweils von einem als Schalter arbeitenden Transistor (Q1, Q2) und von einer Diode (D1, D2) gebildet werden, umfasst, wobei die Mittelpunkte zwischen jeder der Dioden (D1, D2) und jeweils einem der Transistoren (Q1, Q2) über Induktivitäten (Ln, Lp) mit dem Stromwechselrichter verbunden sind, was eine bidirektionale Übertragung der elektrischen Leistung zwischen dem Wechselrichter und der Batterie sicherstellt, **dadurch gekennzeichnet, dass** es eine Schaltung aufweist, die wenigstens einen Zweig umfasst, der von zwei kapazitiven Elementen (C1, C2) gebildet wird und zwischen der Batterie und dem Leistungswandler parallelgeschaltet ist, oder auch wenigstens einen von zwei Gleichrichterelementen (Da, Db) gebildeten Zweig, der dem Stromwechselrichter parallelgeschaltet ist, wobei sich ein Mittelpunkt des wenigstens einen Zweiges zwischen den kapazitiven Elementen oder Gleichrichterelementen befindet und geeignet ist, an eine erste Phase eines Stromversorgungsnetzes (R) angeschlossen zu werden, wobei ein Mittelpunkt eines Armes des Wechselrichters (4) geeignet ist, an eine zweite Phase des Stromversorgungsnetzes angeschlossen zu werden.

**2.** Fahrzeug nach Anspruch 1, wobei der Zweig der Schaltung zwei in Reihe geschaltete kapazitive Elemente (C1, C2) umfasst und zwischen der Batterie und dem Spannungswandler parallelgeschaltet ist.

**3.** Fahrzeug nach Anspruch 1, wobei der Schaltungszweig zwei in Reihe geschaltete Gleichrichterelemente (Da, Db) umfasst und zwischen dem Leistungswandler und dem Stromwechselrichter parallelgeschaltet ist.

**4.** Fahrzeug nach Anspruch 3, wobei die Schaltung einen ersten Zweig umfasst, der zwei dem Wandler parallelgeschaltete kapazitive Elemente (C1, C2) umfasst, und einen zweiten Zweig, der zwei dem Wechselrichter parallelgeschaltete Gleichrichterelemente (Da, Db) umfasst, wobei der Mittelpunkt des ersten und der des zweiten Zweiges jeweils geeignet sind, an die erste Phase angeschlossen zu werden.

**5.** Fahrzeug nach Anspruch 3, wobei wenigstens zwei Transistoren, welche Schalter bilden, jeweils mit einem Gleichrichterelement in Reihe geschaltet sind, wobei eine Phase des Netzes an den zwischen den Transistoren befindlichen Mittelpunkt angeschlossen ist.

**6.** Fahrzeug nach Anspruch 5, wobei das Netz ein Drehstromversorgungsnetz ist, wobei die Schaltung zwei Zweige (6, 7) umfasst, die jeweils zwei Schalter bildende Transistoren umfassen, die jeweils zu einem Gleichrichterelement in Reihe geschaltet sind, wobei zwei Phasen des Netzes jeweils an den zwischen den Transistoren befindlichen Mittelpunkt angeschlossen sind.

**Claims**

**1.** At least partially electric traction motor vehicle, said motor vehicle comprising a traction battery and a power train (1) comprising a current inverter (4) ensuring the supply of power to an electrical machine (5) and a power converter (3) including two branches each formed by a transistor operating as a switch (Q1, Q2) and by a diode (D1, D2), the centre taps between each of the diodes (D1, D2) and each of the transistors (Q1, Q2) respectively being connected, by way of inductors (Ln, Lp), to the current inverter, ensuring a bidirectional transfer of the electric power between the inverter and the battery, **characterized in that** it includes a circuit comprising at least one branch formed of two capacitive elements (C1, C2) and connected in parallel between the battery and the power converter, or else at least one branch formed of two rectifier elements (Da, Db) connected in parallel across the current inverter, a centre tap of said at least one branch being situated between said capacitive or rectifier elements and being able to be connected to a first phase of an electric power supply network (R), a centre tap of an arm of the inverter (4) being able to be connected to a second phase of the power supply network.

**2.** Vehicle according to Claim 1, wherein the branch of the circuit comprises two capacitive elements (C1, C2) in series and is connected in parallel between the battery and the voltage converter.

**3.** Vehicle according to Claim 1, wherein the circuit branch comprises two rectifier elements (Da, Db) in series and is connected in parallel between the power converter and the current inverter.

**4.** Vehicle according to Claim 3, wherein the circuit comprises a first branch comprising two capacitive elements (C1, C2) in parallel across the converter and a second branch comprising two rectifier elements (Da, Db) in parallel across the inverter, the centre tap of each of the first and second branches being able to be connected to the first phase.

**5.** Vehicle according to Claim 3, wherein at least two transistors forming switches are respectively connected in series across each rectifier element, a phase of the network being connected to the centre tap situated between the transistors.

**6.** Vehicle according to Claim 5, wherein the network is a three-phase power supply network, the circuit comprising two branches (6, 7) each comprising two transistors forming switches that are each connected in series across a rectifier element, two phases of the network being respectively connected to the centre tap situated between the transistors.

## FIG.1

$D_{5H}$ $Q_{5H}$ $D_{4H}$ $Q_{4H}$ $D_{3H}$ $Q_{3H}$

$D_{5L}$ $Q_{5L}$ $D_{4L}$ $Q_{4L}$ $D_{3L}$ $Q_{3L}$

$L_p$ $L_n$

$Q_2$ $D_2$ $D_1$ $Q_1$

a b c

C

1 2 3 4 5

FIG.2

# FIG.3

# FIG.4a

# FIG.4b

# FIG.5

# FIG.6

## FIG.7

# FIG.8

## FIG.9a

I    II    |v|    Vbat

350
300
250
200
150
100
50
0

| Mode | Mode | Mode |
| Boost | Buck | Boost |

## FIG.9b

i

60
40
20
0
-20
-40
-60

## FIG.9c

S1  S2

1
0,8
0,6
0,4
0,2
0

| S2 | S1=S2 | S2 | S1 | S1=S2 | S1 |
| =0 | =0 | =0 | =0 | =0 | =0 |

## FIG.9d

S3H=S6H=1    S3H=S6H=1

S3    S1    S3H=S6H=1

1
0,8
0,6
0,4
0,2
0

S3H=S̅6̅H̅

## FIG.9e

1
0,8
0,6
0,4
0,2
0

0    0,01    0,02    0,03    0,04

S3L    S6L    Temps (s)

FIG.10

EP 3 171 505 B1

## FIG.11a

## FIG.11b

## FIG.11c

## FIG.11d

FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GUI-JIA SU ; LIXIN TANG.** Current source inverter based traction drive for EV battery charging applications. *IEEE Vehicle Power and Propulsion Conférence (VPPC),* 2011